# EUROPÄISCHE PATENTSCHRIFT

(11) **EP 2 183 884 B1**
(45) Veröffentlichungstag und Bekanntmachung des Hinweises auf die Patenterteilung: **14.08.2013**
(21) Anmeldenummer: 08760354.4
(22) Anmeldetag: 02.06.2008
(51) Int. Cl.: H04L 12/40

(54) **VERFAHREN ZUR DYNAMISCHEN ANPASSUNG DES KOMMUNIKATIONSVERHALTENS EINER KOMMUNIKATIONSINFRASTRUKTUR IN EINEM KRAFTFAHRZEUG SOWIE SYSTEM HIERZU**
METHOD FOR DYNAMICALLY ADAPTING THE COMMUNICATION BEHAVIOUR OF A COMMUNICATION INFRASTRUCTURE IN A MOTOR VEHICLE, AND SYSTEM THEREFOR
PROCÉDÉ D'ADAPTATION DYNAMIQUE DU COMPORTEMENT DE COMMUNICATION D'UNE INFRASTRUCTURE DE COMMUNICATION DANS UN VÉHICULE AUTOMOBILE ET SYSTÈME ASSOCIÉ

(30) Priorität: 23.07.2007 DE 102007034719
(43) Veröffentlichungstag der Anmeldung: 12.05.2010
(73) Patentinhaber: Robert Bosch GmbH, 70442 Stuttgart (DE)
(72) Erfinder: LIMAM, Mourad, 31141 Hildesheim (DE); MANN PELZ, Rodolfo, 30175 Hannover (DE); BUSSE, Michael, 30161 Hannover (DE)
(86) Internationale Anmeldenummer: PCT/EP2008/056767
(87) Internationale Veröffentlichungsnummer: WO 2009/013051

(56) Entgegenhaltungen:
- WO-A-2004/084066
- WO-A-2005/105527
- DE-A1- 10 118 300
- US-A- 5 343 470
- US-B1- 6 928 348

## Beschreibung

### Stand der Technik

Die Erfindung geht aus von einem Verfahren zur dynamischen Anpassung des Kommunikationsverhaltens einer Kommunikationsinfrastruktur. Gegenstand der Erfindung ist auch ein System für eine solche dynamische Anpassung.

In heutigen Fahrzeugen ist eine Vielzahl von Steuergeräten zur Realisierung von Fahrzeugfunktionen verbaut. Die Steuergeräte eines Anwendungsgebietes sind über Bussysteme verbunden. Die dadurch entstehenden Kommunikationsverbünde werden Domänen genannt. Typische Vertreter sind Motorsteuerungs-, Fahrwerk-, Komfort- und Multimediadomänen. Im Lauf der Zeit wurden verschiedene Kraftfahrzeug-spezifische Bussysteme eingeführt. Diese wurden für die teils unterschiedlichen Anforderungen in den Domänen entwickelt.

Die Domänen und damit die Bussysteme wurden zunächst weitgehend isoliert voneinander betrieben. Aufgrund der Domäneneinteilung sind Funktionen, die durch die elektronischen Komponenten bereitgestellt werden, auf Interaktionen mit Komponenten innerhalb der jeweiligen Domäne beschränkt. Die Schaffung einer Interaktionsmöglichkeit zwischen den Komponenten über Domänengrenzen hinweg ermöglicht die Erweiterung des Funktionsumfangs der vorhandenen Kommunikationsinfrastruktur. Zu diesem Zwecke werden zunehmend Netzelemente, insbesondere Netzkoppelelemente (Gateways) eingesetzt, die über eine statische Konfiguration (einmalig vor Auslieferung des Fahrzeuges) des gewünschten Kommunikationsverhaltens verfügen.

Die WO 2004/084066A beschreibt ein Verfahren zur dynamischen Anpassung der Rechenleistung von Teilsystemen in einem Kraftfahrzeug, wobei eine Bewertung der Fahrzeugsituation anhand von Parametern stattfindet, eine Entscheidung über eine Anpassung der Rechenleistung der Teilsysteme bezüglich ihrer Priorität getroffen und die Anpassung entsprechend durchgeführt wird.

Die WO 2005/105527A offenbart ein Verfahren zur Steuerung von Datenbuseinrichtungen in technischen Systemen mit verteilten Geräten. Dabei wird die Datenbuslast reduziert, ohne eine Sicherheit von Systemen zu beeinträchtigen.

Ferner zeigt die DE 10118300A1 ein Verfahren zum Betreiben von elektronischen Steuereinrichtungen in einem Kraftfahrzeug. Von den Steuereinrichtungen benötigte Signalinformationen werden dabei hinsichtlich von Wichtigkeiten der Signalinformationen bedarfsgerecht zur Verfügung gestellt. Aus der US 2005/003 8573 A1 ist ein System bekannt, das Sensorsignale des Fahrzeugumfeldes einer Risikogradbewertung unterzieht und in Abhängigkeit von Prioritätseinstellungen von Schnittstellen die Sensorsignale an angeschlossene Systeme wie Navigationssystem, PDA, Entertainment-System weitergibt. Wenn ein vorgegebener Risikograd ermittelt ist, werden angeschlossene Systeme abgeschaltet.

### Offenbarung der Erfindung

### Vorteile der Erfindung

Das Verfahren mit den Merkmalen des Anspruchs 1 hat den Vorteil, dass Kommunikationsressourcen im Kraftfahrzeug effizient genutzt werden können und eine dynamische Anpassung des Kommunikationsaufkommens an eine aktuelle Situation erfolgen kann. Die Insassensicherheit wird erhöht durch Priorisierung von sicherheitskritischer Kommunikation in Gefahrensituationen. Es kann auf einfache Weise eine Anpassung des Fahrverhaltens in Sonderzonen wie z.B. Umweltzonen erreicht werden mit Reduktion des Energieverbrauchs und damit des CO₂-Ausstoßes. Dadurch, dass die Kommunikationsinfrastruktur / das Kommunikationssystem nicht für den Worst-Case-Fall ausgelegt werden muss, ist eine Reduktion der Kosten zu erreichen und/oder eine Ermöglichung von leistungsfähigen und neuen Funktionen. Die Erfindung ermöglicht die Anpassung des Verhaltens an eine vorgegebene Situaton, um bestmöglichen Dienst mit begrenzten Ressourcen zu bieten.

Die Kommunikationsinfrastruktur eines Fahrzeuges, das mit Mechanismen nach dem erfindungsgemäßen Verfahren ausgestattet wird, wird in der Regel entgegen der heutigen Praxis nicht für so genannte Worst-Case-Situationen ausgelegt werden. Die Konsequenz ist, dass nicht alle im Fahrzeug verbauten Steuergeräte zur gleichen Zeit mit maximaler Datenmenge kommunizieren können. Dieses ist insofern unproblematisch, als dass eine solche Situation für die Funktion des Fahrzeuges nicht erforderlich ist. Vielmehr wird die Kommunikationsinfrastruktur derzeit häufig nur deshalb für die Worst-Case-Situation ausgelegt, weil ein Verfahren zur Steuerung der Datenströme fehlt.

Mit dem erfindungsgemäßen Verfahren ist sichergestellt, dass die in der jeweiligen Situation erforderliche Kommunikation optimal erfolgen kann.

Besonders vorteilhaft ist es, zur Bewertung Kommunikationsinfrastruktur-oder QoS-Parameter heranzuziehen.

Über die Netzwerkmanagementfunktion können einzelne Netzwerkteilnehmer gezielt aufgefordert werden, ihre Kommunikation über die Kommunikationsinfrastruktur zu reduzieren oder zu beenden.

Um Sonderzonen zu befahren, kann der Fahrzeugzustand beziehungsweise dessen Änderung, z.B. die Reduzierung des CO₂-Ausstoßes nach Anpassung der Priorität und/oder des Datenumfanges der Zentrale mitgeteilt werden.

### Beschreibung der Zeichnungen

- Fig. 1: zeigt den Verfahrensablauf zur dynamischen Anpassung des Kommunikationsverhaltens und
- Fig. 2: ein Blockschaltbild der Kommunikationsinfrastruktur mit adaptivem Netzkoppelelement.

### Ausführungsformen der Erfindung

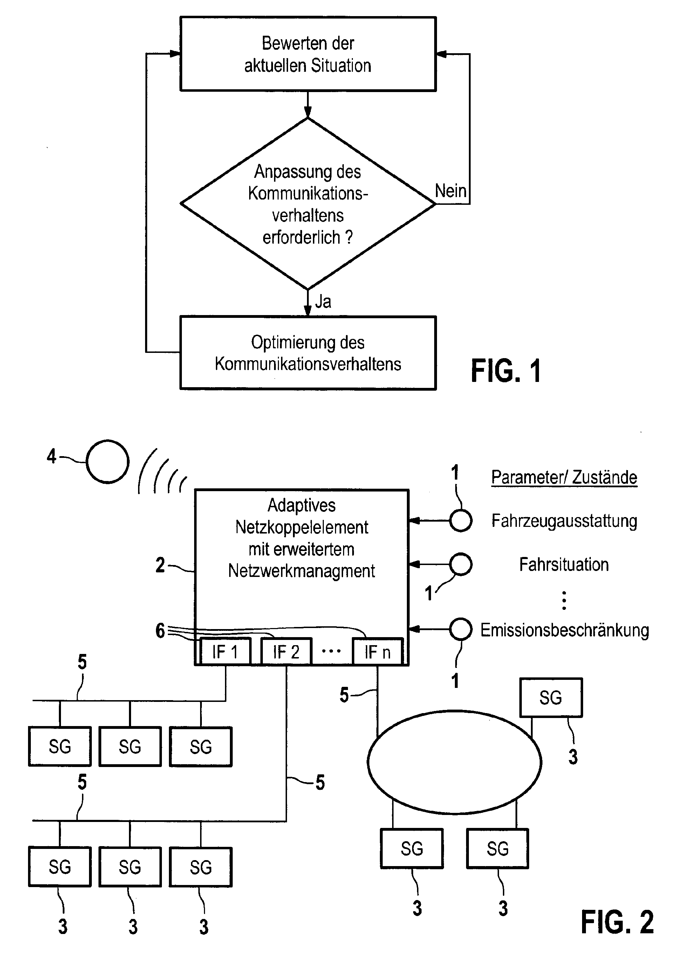

Wie Fig. 1 zeigt, wird zuerst die aktuelle Situation aufgrund von Parametern beziehungsweise Zuständen bewertet, wie z.B. der Fahrsituation, dem Fahrzeugzustand oder der Verkehrsituation, die für die Steuerung des Kommunikationsverhaltens im Fahrzeug herangezogen werden sollen. In Abhängigkeit der Bewertung wird entschieden, ob Kommunikationsdatenströme innerhalb der Kommunikationsinfrastruktur bezüglich ihrer Priorität und/oder ihrem Datenumfang angepasst werden müssen. Das Verfahren entscheidet aufgrund der unter Schritt 1 ermittelten Situation und des vorliegenden (z.B. über Konfiguration oder QoS-Verkehrsverträge) Wissens über die Datenströme, inwieweit eine Anpassung des Kommunikationsverhaltens angemessen ist. Wenn eine Anpassung angemessen beziehungsweise notwendig ist, wird die Entscheidung übertragen, um innerhalb der Kommunikationsinfrastruktur einzelne Netzwerkteilnehmer 3 ganz- oder teilweise abzuschalten, beziehungsweise ihnen Datenkapazität bezüglich ihrer Kommunikationsdatenströme teilweise oder vollständig zu entziehen zugunsten von Kommunikationsdatenströmen für Netzwerkteilnehmer 3, die durch die Bewertung mit höherer Priorität eingestuft worden sind. Damit wird das Kommunikationsverhalten optimiert. Eine Anpassung des Kommunikationsverhaltens kann dadurch erfolgen, indem das Netzkoppelelement 2 mit Netzwerkmanagementfunktion gemäß Fig. 2 das Weiterleiten von einzelnen Datenströmen aufgrund des kofigurierten Wissens über die Notwendigkeit dieser Datenströme in der aktuellen Situation unterlässt. Als Kommunikationsinfrastruktur werden alle Einzelelemente eines Kommunikationsnetzes verstanden, wie z.B. das Netzkoppelelement 2 in Fig. 2, das die Kraftfahrzeugbusse 5 mit den Netzwerkteilnehmern 3 beziehungsweise deren Steuergeräte untereinander über ihre Schnittstellen koppelt.

Die Eingangsparameter beziehungsweise Zustände werden dem Netzkoppelelement 2 über die Sensoren 1 geliefert.

Bei einem ersten Ausführungsbeispiel fährt ein Fahrzeug, das mit dem erfindungsgemäßen Verfahren ausgestattet ist, mit aktiviertem Überholassistenten auf der Autobahn. Neben dem Fahrzeug kommt ein anderes Fahrzeug ins Schleudern. Unter Schritt 1 nutzt das Verfahren Informationen der Umfelderfassung oder der Fahrzeug / Fahrzeugkommunikation und bewertet die aktuelle Situation als unvermeidbaren Unfall. Unter Schritt 2 entscheidet das Verfahren aufgrund seiner Konfiguration, dass die Datenströme des Überholassistenten in der aktuellen Situation nicht von Bedeutung sind und die Datenströme der Unfallfolgeminderungsfunktionen (collision mitigation) höchste Priorität haben. Unter Schritt 3 optimiert das Netzkoppelelement sein Routingverhalten, indem es die Datenströme des Überholassistenten blockiert und die Datenströme der Unfallfolgeminderungsfunktionen mit maximaler Geschwindigkeit weiterleitet. Zusätzlich kann das Verfahren, z.B. über ein erweitertes Netzwerkmanagement gezielt einzelne Kommunikationspartner auffordern, ihre Kommunikation über die Bussysteme 5 zu reduzieren oder zu beenden.

Bei einem zweiten Ausführungsbeispiel fährt ein Fahrzeug mit hoher Motorleistung und umfangreichen Zusatzfunktionen, z.B. Klimaanlage, Sitzheizung in eine Umweltzone ein (Zonen, in denen temporär oder dauerhaft ein geringerer beziehungsweise verminderter Schadstoffausstoß gefordert wird). Unter Schritt 1 nutzt das Verfahren Informationen der Fahrzeug / Infrastruktur-Kommunikation und bewertet die aktuelle Situation als erhöht schadstoffausstoßkritisch. Unter Schritt 2 entscheidet das Verfahren aufgrund seiner Konfiguration, dass Komponenten wie die Klimaanlage in der Situation eine untergeordnete Bedeutung haben und bewirkt eine Reduktion der Leistung oder eine Abschaltung der Komponenten, um den Energieverbrauch und damit den Schadstoffausstoß zu reduzieren. Weiterhin wird die Motorsteuerung in einen Energiesparmodus geschaltet. Die verfügbare Motorleistung sowie der Schadstoffausstoß werden dadurch reduziert. Die Schadstoffausstoßbegrenzung wird über Fahrzeug / Infrastruktur-Kommunikation an eine Zentrale 4 gemeldet und damit eine Fahrerlaubnis für die Umweltzone erlangt.

Es ist vorteilhaft, den Fahrzeugzustand von der Zentrale 4 durch Übertragung fahrzeugrelevanter Parameter laufend zu überwachen, um zu überprüfen, ob der Vorrang noch berechtigt ist. Außerdem kann anderen Fahrzeugen dieser Vorrang mitgeteilt werden.

## Patentansprüche

1. Verfahren zur dynamischen Anpassung eines Kommunikationsverhaltens einer Kommunikationsinfrastruktur in einem Kraftfahrzeug in Abhängigkeit von einer Fahrsituation mit folgenden Schritten:
- Es wird anhand von Parametern oder Zuständen bewertet, ob eine aktuelle Fahrsituation erhöht schadstoffausstoßkritisch ist,
- in Abhängigkeit der Bewertung wird entschieden, ob
Kommunikationsdatenströme innerhalb der Kommunikationsinfrastruktur bezüglich ihrer Priorität und/oder ihrem Datenumfang angepasst werden müssen,
- wenn eine Anpassung notwendig ist, wird diese Entscheidung übertragen, um innerhalb der Kommunikationsinfrastruktur einzelne Netzwerkteilnehmer (3) ganz oder teilweise abzuschalten und ihnen Datenkapazität bezüglich ihrer Kommunikationsdatenströme derart teilweise oder vollständig zu entziehen zugunsten von Kommunikationsdatenströmen für Netzwerkteilnehmer (3), die durch die Bewertung mit höherer Priorität eingestuft werden, um einen Schadstoffausstoß des Kraftfahrzeugs oder einen Energieverbrauch des Kraftfahrzeugs zu reduzieren.

2. Verfahren nach Anspruch 1, **dadurch gekennzeichnet, dass** zur Bewertung die Kommunikationsinfrastruktur- oder QoS-Parameter herangezogen werden.

3. Verfahren nach Anspruch 1 oder 2, **dadurch gekennzeichnet, dass** die Kommunikationsdatenströme über ein Netzkoppelelement (2) gesteuert werden.

4. Verfahren nach einem der Ansprüche 1 bis 3, **dadurch gekennzeichnet, dass** über eine Netzwerkmanagementfunktion einzelne Netzwerkteilnehmer (3) gezielt aufgefordert werden, ihre Kommunikation über die Kommunikationsinfrastruktur zu reduzieren oder zu beenden.

5. Verfahren nach einem der Ansprüche 1 bis 4, **dadurch gekennzeichnet, dass** nach Anpassung der Priorität und/oder des Datenumfangs der Fahrzeugzustand und/oder dessen Änderung ermittelt wird und dies einer Zentrale (4) mitgeteilt wird, um eine Berechtigung zu erhalten, eine Sonderzone zu befahren.

6. Verfahren nach einem der Ansprüche 1 bis 5, **dadurch gekennzeichnet, dass** nach Anpassung der Priorität und/oder des Datenumfangs der Fahrzeugzustand und/oder dessen Änderung ermittelt wird und einem anderen Kraftfahrzeug (5) mitgeteilt wird, um einen Vorrang gegenüber dem anderen Kraftfahrzeug zu erhalten.

7. Verfahren nach Anspruch 5, **dadurch gekennzeichnet, dass** der Fahrzeugzustand von der Zentrale (4) durch Übertragung fahrzeugrelevanter Parameter laufend überwacht wird, um zu überprüfen, ob der Vorrang noch berechtigt ist.

## Claims

1. Method for dynamically adapting a communication behaviour of a communication infrastructure in a motor vehicle as a function of a driving situation, comprising the following steps:
- on the basis of parameters or states it is evaluated whether a current driving situation is critical in terms of emission of pollutants to a raised level,
- as a function of the evaluation it is decided whether the communication data flows within the communication infrastructure have to be adapted with respect to their priority and/or their scope of data,
- if adaptation is necessary, this decision is transmitted in order to switch off entirely or partially individual network subscribers (3) within the communication infrastructure, and to partially or completely withdraw data capacity from them with respect to their communication data flows in favour of communication data flows for network subscribers (3) which are categorised with a higher priority by the evaluation, in order to reduce the emission of pollutants by the motor vehicle or consumption of energy by the motor vehicle.

2. Method according to Claim 1, **characterized in that** the communication infrastructure or QoS parameters are used for the evaluation.

3. Method according to Claim 1 or 2, **characterized in that** the communication data flows are controlled by means of a network-coupling element (2).

4. Method according to one of Claims 1 to 3, **characterized in that** individual network subscribers (3) are selectively requested, by means of a network management function, to reduce or end their communication over the communication infrastructure.

5. Method according to one of Claims 1 to 4, **characterized in that**, after adaptation of the priority and/or of the scope of data, the state of the vehicle and/or the change therein are/is determined, and this is communicated to a control centre (4) in order to obtain authorisation to travel through a special zone.

6. Method according to one of Claims 1 to 5, **characterized in that**, after adaptation of the priority and/or the scope of data, the state of the vehicle and/or the change therein are/is determined and communicated to another motor vehicle (5) in order to obtain priority with respect to the other motor vehicle.

7. Method according to Claim 5, **characterized in that** the state of the vehicle is continuously monitored by the control centre (4) by transmitting vehicle-relevant parameters, in order to check whether the priority is still authorized.

## Revendications

1. Procédé d'adaptation dynamique d'un comportement de communication dans une infrastructure de communication dans un véhicule automobile en fonction d'une situation de conduite, comprenant les étapes suivantes :
- une évaluation a lieu au moyen de paramètres ou d'états afin de déterminer si une situation de conduite actuelle présente un risque accru de production de substances nocives,
- en fonction de l'évaluation, il est décidé s'il faut adapter la priorité et/ou la teneur en données de flux de données de communication à l'intérieur de l'infrastructure de communication,
- si une adaptation est nécessaire, cette décision est transmise pour mettre hors tension totalement ou partiellement les périphériques de réseau (3) individuels à l'intérieur de l'infrastructure de communication et retirer de la sorte partiellement ou totalement leur capacité de données en rapport avec leurs flux de données de communication au profit des flux de données de communication pour les périphériques de réseau (3) qui sont classés par l'évaluation comme ayant une priorité supérieure, en vue de réduire une production de substances nocives du véhicule automobile ou une consommation d'énergie du véhicule automobile.

2. Procédé selon la revendication 1, **caractérisé en ce que** les paramètres de l'infrastructure de communication ou de qualité de service sont utilisés pour l'évaluation.

3. Procédé selon la revendication 1 ou 2, **caractérisé en ce que** les flux de données de communication sont commandés par le biais d'un élément de connexion au réseau (2).

4. Procédé selon l'une des revendications 1 à 3, **caractérisé en ce que** les périphériques de réseau (3) individuels sont invités de façon ciblée par le biais d'une fonction de gestion de réseau à réduire ou à mettre fin à leur communication par le biais de l'infrastructure de communication.

5. Procédé selon l'une des revendications 1 à 4, **caractérisé en ce qu'**après l'adaptation de la priorité et/ou de la teneur en données, l'état du véhicule et/ou sa modification est déterminé et celui-ci est communiqué à une centrale (4) afin d'obtenir une autorisation de circuler dans une zone spéciale.

6. Procédé selon l'une des revendications 1 à 5, **caractérisé en ce qu'**après l'adaptation de la priorité et/ou de la teneur en données, l'état du véhicule et/ou sa modification est déterminé puis communiqué à un autre véhicule automobile (5) afin d'obtenir une priorité par rapport à l'autre véhicule automobile.

7. Procédé selon la revendication 5, **caractérisé en ce que** l'état du véhicule est surveillé continuellement par la centrale (4) par une transmission des paramètres pertinents du véhicule afin de vérifier si la priorité est encore justifiée.
